# EUROPÄISCHE PATENTSCHRIFT

(11) **EP 3 332 116 B1**
(45) Veröffentlichungstag und Bekanntmachung des Hinweises auf die Patenterteilung: **09.10.2019**
(21) Anmeldenummer: 15748238.1
(22) Anmeldetag: 07.08.2015
(51) Int. Cl.: F03B 17/06, F03D 3/06

(54) **SCHAUFELRADVORRICHTUNG, SCHAUFELRADMODUL UND STRÖMUNGSKRAFTWERK**
IMPELLER DEVICE, IMPELLER MODULE AND TURBINE
DISPOSITIF À ROUE À AUBES, MODULE DE ROUE À AUBES ET CENTRALE HYDRAULIQUE

(43) Veröffentlichungstag der Anmeldung: 13.06.2018
(73) Patentinhaber: REAC Energy GmbH, 82211 Herrsching (DE)
(72) Erfinder: HOECK, Michael, 82211 Herrsching (DE); BREITBACH, Tobias, 82211 Herrsching (DE)
(74) Vertreter: Strehl Schübel-Hopf & Partner
(86) Internationale Anmeldenummer: PCT/EP2015/068318
(87) Internationale Veröffentlichungsnummer: WO 2017/025122

(56) Entgegenhaltungen:
- CH-A- 84 132
- DE-C- 327 120

## Beschreibung

### Gebiet der Erfindung

Die Erfindung betrifft eine Schaufelradvorrichtung nach Anspruch 1, ein Schaufelradmodul und ein Strömungskraftwerk nach den weiteren unabhängigen Ansprüchen.

### Hintergrund der Erfindung

Es ist seit langem bekannt, zur Energieerzeugung aus Wasserkraft Schaufelräder zu verwenden. Während für höhere Strömungsgeschwindigkeiten mit Pelton- oder Francis-Turbinen sehr ausgereifte Technologien existieren, kann Energie aus Strömungen mit geringer Fließgeschwindigkeit oder geringen Druckgradienten bisher nur mit geringem Wirkungsgrad gewonnen werden. Eine Grenze liegt hier bei etwa 2 m/s.

Die Energiegewinnung im Bereich niedriger Fließgeschwindigkeiten ist jedoch insbesondere zur Stromerzeugung aus Meeresströmungen sehr wichtig und vielversprechend. Meeresströmungen können heute insbesondere dann nutzbar gemacht werden, wenn es sich um gezeitenabhängige Strömungen an engen Ein- oder Ausflüssen von Buchten, Fjorden, oder dergleichen handelt, wo vergleichsweise hohe Strömungsgeschwindigkeiten erreicht werden können.

Ein Beispiel für eine Unterwasserturbine zur Energiegewinnung aus Meeresströmungen ist in der WO2009/126995A1 beschrieben.

Aus der WO2009/126995A1 ist ferner eine trommelartige Vorrichtung zur Nutzbarmachung der kinetischen Energie von Gezeitenströmungen offenbart, die schwenkbare Schaufeln umfasst. Die Schaufeln liegen in einem ausgeklappten, kraftübertragenden Zustand an einem Anschlag an.

Die Aufklappbewegungen der Schaufeln werden in den bekannten Systemen durch die Strömungskraft angetrieben. Eine Angriffsfläche für die Strömung wächst dabei im Verlauf der Aufklappbewegung und ist dementsprechend in einer ersten Position, in welcher die Schaufeln eingeklappt sind, minimal. Unter Umständen kann auf eine die konvexen Außenflächen der Schaufeln treffende Strömung sogar gegen die Aufklapprichtung wirken.

Insbesondere bei geringen Strömungsgeschwindigkeiten ist es daher schwierig, im Anfangsbereich der Aufklappbewegung eine zum Initiierten der Aufklappbewegung hinreichend starke Strömungskraft zu erzeugen. Zur Lösung dieses Problems sind in der DE 10 2003 010 379 A1 bereits Strömungsleitflächen mit einer bestimmten Gestalt, Flügelelemente im Endbereich der Schaufeln und eine hydrodynamische Wechselwirkung der Schaufeln mit Hilfe von Kanälen innerhalb des Rotors vorgeschlagen worden.

In der US 3,992, 125 wird vorgeschlagen, die Aufklappbewegung von Schaufeln mit der Hilfe von gehäusefesten Schienen zu führen.

Ein weiteres Beispiel einer Schaufelradvorrichtung zeigt die DE 327 120.

### Zusammenfassung der Erfindung

Der Erfindung liegt die Aufgabe zugrunde, ein Schaufelrad zur Energiegewinnung aus Gewässerströmung bereitzustellen, das insbesondere für stetige Strömungen mit geringen Strömungsgeschwindigkeiten effizient nutzbar ist.

Weitere Aspekte der Erfindung betreffen insbesondere modulare Generatorsysteme und Module für solche Systeme, die ein erfindungsgemäßes Schaufelrad umfassen.

Die Aufgabe wird durch die Merkmale der unabhängigen Ansprüche gelöst, während sich vorteilhafte Ausgestaltungen und Weiterbildungen der Erfindung aus den abhängigen Ansprüchen ergeben.

Die Erfindung geht aus von einer Schaufelradvorrichtung mit einem drehbaren Rotor, wobei der Rotor mehrere gleichmäßig über den Umfang des Rotors verteilte, schwenkbar an dem Rotor befestigte Schaufeln umfasst. Die Schaufeln sind in einer Aufklapp-Schwenkbewegung in einer Aufklapprichtung von einer ersten Position in eine zweite Position schwenkbar, wobei die Schaufeln in der ersten Position aneinander anliegen und die Schaufeln in der zweiten Position in einer im Wesentlichen radialen Richtung von dem Rotor abstehen.

Das Rotor ist zur Anordnung in einer Strömung ausgelegt, so dass die Strömung wenigstens in einem Schlussteil der Aufklapp-Schwenkbewegung ein in die Aufklapprichtung gerichtetes Aufklappmoment auf die Schaufeln ausübt.

Der Schlussteil umfasst insbesondere wenigstens die letzten 5-10% des gesamten von der Schwenkbewegung überstrichenen Winkelbereichs, wobei das von der Strömung erzeugte Aufklappmoment in der Regel im Verlauf der Aufklappbewegung zunimmt und in der zweiten Position sein Maximum erreicht. In der zweiten Position wirkt die durch die Aufklappbewegung erzeugte Kraft über mechanische Verbindungselemente auf die nächste Schaufel bzw. erzeugt ein Drehmoment auf den Rotor. Erfindungsgemäß liegt die Schaufel in der zweiten Position an einem Anschlag an.

Die Erfindung schlägt insbesondere vor, eine mechanische Verbindung benachbarter Schaufeln untereinander vorzusehen. Die mechanische Verbindung ist so ausgestaltet, dass das Aufklappmoment im Schlussteil der Aufklapp-Schwenkbewegung einer ersten Schaufel zumindest teilweise in ein Aufklappmoment einer benachbarten Schaufel in einem Anfangsteil der Aufklapp-Schwenkbewegung der benachbarten Schaufel übersetzt wird.

In einer bevorzugten Ausgestaltung der Erfindung macht der Schlussteil die letzten 5 - 15% der Schwenkbewegung aus.

Das im Schlussteil der Aufklapp-Schwenkbewegung der ersten Schaufel reichlich vorhandene Aufklappmoment kann so vorteilhaft zum Unterstützen bzw. Initiieren des Aufklappens der benachbarten Schaufel in einer Phase genutzt werden, in welcher die auf Letztere wirkende Gesamt-Strömungskraft in der Aufklapprichtung unzureichend ist und trägt so zur Drehmomenterzeugung bei.

In Ausgestaltungen der Erfindung mit Anschlägen für die Innenbereiche der Schaufeln sind die Anschläge vorzugsweise so angebracht, dass die gedachte Verlängerung der Innenbereiche der Schaufeln in etwa durch die Mitte der Rotorwelle geht.

Eine benachbarte Schaufel im Sinne der Erfindung muss nicht unbedingt unmittelbar benachbart sein. Es sind auch Ausgestaltungen der Erfindung denkbar, in denen die mechanische Verbindung eine Schaufel jeweils mit ihren übernächsten Nachbar-Schaufeln verbindet. Die benachbarte Schaufel, deren Aufklappbewegung initiiert wird, ist vorzugsweise die entgegen der Rotationsrichtung benachbarte Schaufel, welche in einer Drehbewegung des Rotors der ersten Schaufel folgt.

In einer bevorzugten Ausgestaltung der Erfindung ist die mechanische Verbindung als ein längliches Koppelelement ausgebildet. Das Koppelelement beispielsweise kann eine Stange, ein Band, ein Seil oder eine Kette sein und ist insbesondere so gestaltet, dass es ein Ausklappen der Schaufeln im Sinne der Erfindung unterstützt, das Einklappen der Schaufeln aber nicht behindert, wenn diese gegen die Strömungsrichtung laufen. Insbesondere wird vorgeschlagen, dass das Koppelelement eine Spiralfeder oder eine rotatorisch arbeitende Drehfeder umfasst. Um die zersetzenden bzw. alternden Effekte des Salzwassers möglichst zu vermeiden, können die Federelemente eingekapselt sein, beispielsweise in einer teleskopierbaren Hülle derart, dass die Feder bei einer bestimmten Längung des Elements unter Druck gesetzt wird und im ganz zusammengedrückten Zustand die maximale Längung des Koppelelements definiert. In einer rotatorisch arbeitenden Variante können Hebelarme vorgesehen sein, wie sie aus Türöffnern bzw. -schließern von Brandschutztüren bekannt sind.

Ferner wird vorgeschlagen, dass das Koppelelement an einander entsprechenden Befestigungspunkten an den benachbarten Schaufeln befestigt ist. Befestigungspunkte entsprechen einander insbesondere dann, wenn die an den Befestigungspunkten wirkenden Kräfte die gleiche Hebelwirkung im Hinblick auf die Aufklappbewegung erzeugen. Es sind weitere Ausgestaltungen der Erfindung denkbar, in denen die Befestigungspunkte versetzt sind und so unterschiedliche Hebelwirkungen erzeugten.

In einer bevorzugten Ausgestaltung der Erfindung ist das Koppelelement längenveränderlich und es weist eine federnde Charakteristik auf. Im Vergleich zu mechanischen Verbindungen mit im Wesentlichen unelastischen Seilen, Ketten oder Stangen kann so ein ruhigerer Lauf erreicht werden und die Gefahr einer Behinderung durch Verheddern im eingeklappten Zustand der Schaufeln kann reduziert werden.

In einer bevorzugten Ausgestaltung der Erfindung sind aufgrund der vorteilhaften Hebelwirkungen die Befestigungspunkte in einem äußeren Endbereich der Schaufeln angeordnet. Weiter ist im Fall eines Koppelelements, welches eine mechanische Verbindung zwischen einer vorlaufenden Schaufel und einer nachlaufenden Schaufel herstellt, vorzugsweise der Befestigungspunkt an der vorlaufenden Schaufel gegenüber dem Befestigungspunkt an der nachlaufenden Schaufel nach radial außen versetzt. Dadurch ergeben sich Vorteile in den Hebelverhältnissen, die Längenveränderung der Koppelelemente ist vergleichsweise gering und sich die Koppelelemente stören nicht beim Einklappen der Schaufeln.

Ferner wird vorgeschlagen, dass die Schaufeln in einem Drehpunkt schwenkbar an dem Rotor befestigt sind, wobei der Drehpunkt die Schaufeln jeweils in einen nach radial außen ausklappenden Arbeitsbereich und einen nach radial innen klappenden Innenbereich aufteilt, wobei Letzterer in der zweiten Position an dem Anschlag anliegt. So kann eine zuverlässige und robuste Kraftübertragung in der zweiten Position sichergestellt werden.

Vorzugsweise umfassen die Schaufeln jeweils eine konkave Schaufelfläche, die in der zweiten Position einer Anströmrichtung der Strömung zugewandt ist.

Ein weiterer Aspekt der Erfindung umfasst ein Schaufelradmodul mit einem gemeinsamen Rahmen und mehreren Schaufelradvorrichtungen der oben beschriebenen Art zur Verwendung unter Wasser zur Gewinnung von Energie aus Gewässerströmungen, wobei die mehreren Schaufelradvorrichtungen in dem gemeinsamen Rahmen angeordnet sind. Mehrere solcher Module können über- oder nebeneinander angeordnet werden, mit Seilen am Gewässeresboden befestigt werden und/oder mit Schwimmkörpern schwebend in einer Strömung gehalten werden. Dabei sind die die Rotoren der Schaufelradvorrichtungen vorzugsweise jeweils mit einem Generator verbunden.

Ein weiterer Aspekt der Erfindung betrifft ein Strömungskraftwerk mit wenigstens einem Modul der vorgenannten Art.

In dem Strömungskraftwerk können die Schaufelradmodule mit flexiblen Verbindungselementen miteinander in einer Reihe oder zu einem Netz verbunden sein und über Seile am Gewässerboden verankert sein. Im Gehäuse bzw. am Rahmen sind vorzugsweise luft- oder gasgefüllte Hohlräume vorgesehen, die teilweise mit Wasser aufgefüllt oder entleert werden können, um einen gewünschten Auftrieb einzustellen. Neben Luft oder Gas können auch andere Medien als Füllung der Hohlräume gewählt werden, sofern ein spezifisches Gewicht des gewählten Mediums geringer als dasjenige von Wasser ist.

Durch die mechanische Verbindung der Schaufeln untereinander kann das Aufklappen zuverlässig initiiert werden, ohne dass eine komplizierte Leitflächengeometrie für die Strömung erforderlich ist.

Weitere Vorteile ergeben sich aus der folgenden Figurenbeschreibung. Die Figuren, ihre Beschreibung, die Ansprüche und die Einleitung erhalten zahlreiche Merkmale der Erfindung in speziellen Kombinationen, die der Fachmann auch einzeln betrachten und zu weiteren sinnvollen Kombinationen zusammenfassen wird um die Erfindung, wie sie in den Ansprüchen definiert ist, an seine Bedürfnisse anzupassen.

### Kurze Beschreibung der Figuren

Fig. 1 zeigt schematisch eine Schaufelradvorrichtung nach einem ersten Ausführungsbeispiel der Erfindung.
Fig. 2 zeigt ein Schaufelradmodul mit mehreren Schaufelradvorrichtungen nach Fig. 1 in einem gemeinsamen Rahmen.
Fig. 3 zeigt schematisch ein schwimmendes Verbundsystem mit mehreren Schaufelradmodulen gemäß Fig. 2.
Fig. 4 zeigt einen netzartigen Verbund von mehreren Turbinenmodulen gemäß Fig. 2 mit einer Verankerung.

### Detaillierte Beschreibung der Ausführungsbeispiele

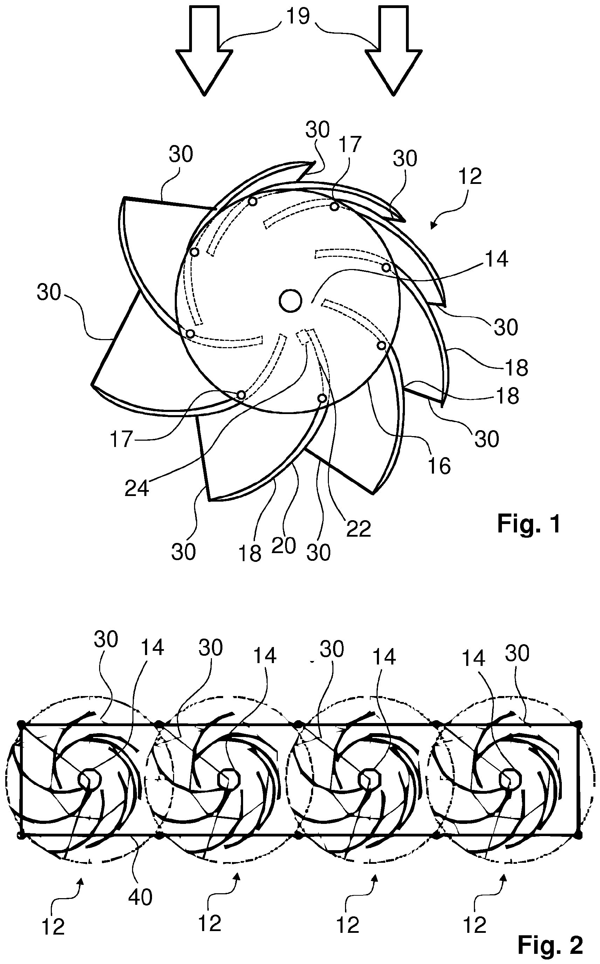

Fig. 1 zeigt eine Schaufelradvorrichtung mit einem drehbar gelagerten Schaufelrad 12. Das Schaufelrad umfasst einen Rotor 14 als Grundkörper, der eine starre Nabe des Schaufelrads 12 bildet. Der Rotor wird im Wesentlichen von zwei kreisförmigen, konzentrisch und senkrecht zur Rotationsachse angeordneten Lagerplatten 16 gebildet, zwischen welchen an Drehpunkten 17 am Außenumfang der Lagerplatten 16 jeweils eine Schaufel 18 schwenkbar befestigt ist. Die Schaufeln 18 sind in einer Aufklapprichtung von einer ersten Position in eine zweite Position schwenkbar.

In der ersten Position liegen die Schaufeln 18 überlappend aneinander an, und zwar derart, dass jede Schaufel 18 sich an der nächsten, benachbarten Schaufel 18 abstützt. Die Schaufeln 18 sind gekrümmt und ihr Krümmungsradius entspricht im Wesentlichen dem Außenradius des Rotors 14, also des Lochkreises der Drehpunkte 17 in den Lagerplatten 16. In diesem Zusammenhang sollen Radien als "im Wesentlichen gleich" bezeichnet werden, wenn sie um weniger als 10 % bis 20 % voneinander abweichen.

Die Schaufeln 18 sind in den Drehpunkten 17 schwenkbar befestigt, wobei die Drehpunkte 17 die Schaufeln 18 jeweils in einen nach radial außen aufklappenden Arbeitsbereich 20 und in einen nach radial innen einklappenden Innenbereich 22 aufteilen. In der zweiten Position liegt der Innenbereich 22 der Schaufeln 18 gemäß der Erfindung an einem Anschlag 24 des Rotors 14 an. Der Anschlag 24 kann entweder an einer Innenfläche der Lagerplatten 16 des Rotors 14 ausgebildet sein oder an einer Achse des Rotors 14. In der zweiten Position kann über den Anschlag 24 ein an den Arbeitsbereichen 20 in der Ausklapprichtung der Schaufeln 18 angreifendes Drehmoment auf den Rotor 14 übertragen werden. Exemplarisch sind auch weitere Ausgestaltungen denkbar, in denen eine Begrenzung der Aufklappbewegung erfolgt über die Länge der Koppelelemente bzw. über die Wahl der Anbindungspunkte der Koppelemente an den Schaufeln erfolgt.

In der zweiten Position der Schaufeln 18 bilden die Enden der Arbeitsbereiche 20 die radial äußersten Punkte des Schaufelrads 12 und eine Hüllkurve der Schaufelspitzen im ausgeklappten Zustand hat einen Radius, der um ein Mehrfaches größer ist als ein Außenradius des Rotors 14. Durch das Ausklappen der Schaufeln 18 kann der Radius des Schaufelrads 12 daher deutlich vergrößert werden. In Ausgestaltungen der Erfindung ohne Anschlag wird als zweite Position oder ausgeklappte Position der Schaufeln 18 diejenige Schwenkposition bezeichnet, in welcher die radiale Entfernung des äußeren Endes der Schaufel 18 von der Rotationsachse des Rotors maximal wird.
Die Länge des Innenbereichs 22 macht etwa ein 30% der Gesamtlänge der Schaufeln 18, wobei hier die Längenverhältnisse als Bogenmaß entlang der Schaufelkrümmung angeben werden. Die Innenliegenden 30% entsprechen etwa zwei Dritteln des radialen Abstands zwischen den Drehpunkten 17 des Rotors 14 und den Rotormittelpunkt.

Im Betrieb ist das Schaufelrad 12 in einer Strömung 19 angeordnet und wird von dieser in der Ansicht aus Fig. 1 gegen den Uhrzeigersinn gedreht.

Auf der in Fig. 1 rechten Seite werden die Schaufeln durch die Strömungskraft des einströmenden Wassers eingeklappt, so dass sie im angelegten Zustand gegen die Strömungsrichtung geführt werden und der Strömung nur einen geringen Widerstand entgegensetzen.

Wenn die Spitze der eingeklappten Schaufeln 18 den der Strömungsrichtung zugewandten Scheitelpunkt der Bewegung erreicht haben, greift die Strömung 19 unter die Schaufeln 18 und klappt diese auf. Je weiter die Schaufeln 18 durch die Strömung 19 in die Richtung der zweiten Position bewegt werden, desto größer wird die Angriffsfläche für die Strömung 19. Das Schaufelrad 12 ist daher zur Anordnung in einer Strömung 19 ausgelegt, und zwar derart, dass die Strömung 19 wenigstens in einem Schlussteil der Aufklapp-Schwenkbewegung ein in die Aufklapprichtung gerichtetes Aufklappmoment auf die Schaufeln 18 ausübt. Das Aufklappmoment ist ein auf die Schaufeln 18 wirkendes Drehmoment mit dem Drehpunkt 17 als Zentrum.

Die benachbarten Schaufeln 18 sind durch eine mechanische Verbindung 30 untereinander verbunden. In dem in Fig. 1 dargestellten Ausführungsbeispiel besteht die mechanische Verbindung durch längliche, elastische Koppelelemente 30 wie beispielsweise Gummibänder oder Spiralfedern, deren Länge sich gemäß einer gewünschten Charakteristik unter Zugkraft verändert.

Die mechanische Verbindung 30 ist so ausgestaltet, dass das Aufklappmoment im Schlussteil der Aufklapp-Schwenkbewegung einer ersten Schaufel 18 zumindest teilweise in ein Aufklappmoment einer benachbarten Schaufel 18 in einem Anfangsteil der Aufklapp-Schwenkbewegung der nachfolgende Schaufel 18 übersetzt wird. Die Längen und Befestigungspunkte der Schaufeln 18 und Koppelelemente 30 sind so definiert, dass die Kraftübertragung beginnt, wenn das Ende der nachlaufenden Schaufel 18 sich etwa 20 - 30° vor dem Staupunkt befindet. Der Staupunkt ist ein Schnittpunkt einer in der Strömungsrichtung durch den Rotormittelpunkt verlaufenden Gerade mit der gedacht zu einem Kreis fortgesetzten Bahnkurve der eingeklappten Enden der Schaufel 18. In diesem Bereich beginnt der auf die konvexen Außenseiten der Schaufeln wirkende Staudruck stark abzunehmen, so dass die Aufklappbewegung kaum noch gegen den Staudruck arbeiten muss.

Die Länge der Koppelelemente 30 und deren Befestigungspunkte an den Schaufeln 18 sind daher so gewählt, dass die Koppelelemente 30 schlaff sind, wenn die beiden durch das betreffende Koppelelement 30 verbundenen Schaufeln 18 in der ersten Position am Rotor 14 anliegen. Wenn beide Schaufeln 18 vollständig ausgeklappt sind, sollten die Koppelelemente 30 allenfalls eine im Vergleich zur Strömungskraft geringe Zugkraft übertragen. In Zwischenstellungen, in denen die erste Schaufel 18 teilweise ausgeklappt ist und die zweite Schaufel 18 noch anliegt, nimmt der Abstand der Befestigungspunkte ein Maximum an und es wird ein Teil des Aufklappmoments übertragen.

Dazu ist das Koppelelement 30 an Befestigungspunkten an einer vorlaufenden Schaufel 18 und an einer nachlaufenden Schaufel 18 befestigt die Befestigungspunkte versetzt zueinander angeordnet sind. Insbesondere ist der Befestigungspunkt an der vorlaufenden Schaufel 18 gegenüber dem Befestigungspunkt an der nachlaufenden Schaufel 18 nach radial außen versetzt.

In einem alternativen Ausführungsbeispiel können die Koppelelemente an einander entsprechenden Befestigungspunkten im Endbereich der Schaufeln befestigt sein, d.h. auf der gleichen radialen Höhe.

Fig. 2 zeigt ein Schaufelradmodul mit mehreren in einem Rahmen 40 angeordneten Schaufelrädern 12 mit der gleichen Rotationsrichtung. Der Rahmen 40 kann erfindungsgemäß in einer senkrecht zur Strömungsrichtung verlaufenden Symmetrieebene, in welcher auch die Rotationsachsen der Schaufelräder 12 liegen, vollkommen symmetrisch sein und für einander entgegengesetzte Strömungsrichtungen gleich wirken. Eine spezielle Strömungsleitgeometrie ist nicht erforderlich.

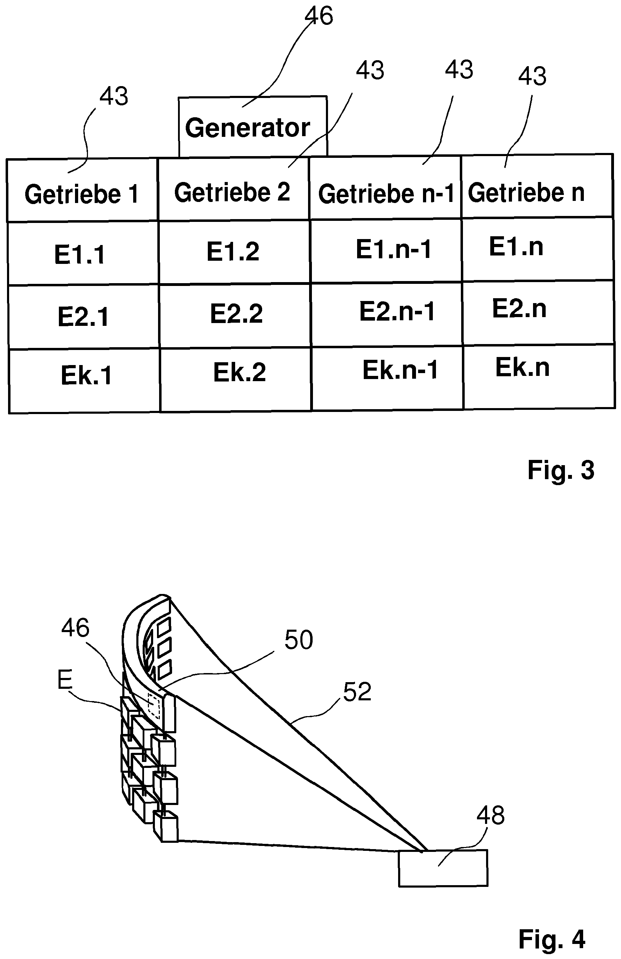

Fig. 3 und 4 zeigen schematisch einen Verbund von mehreren Modulen E1.1 - Ek.n der in Fig. 2 dargestellten Art.

Der Rotor 14 bzw. das Schaufelrad 12 treibt eine Welle an, die über einen Kupplungsbereich 43 mit einem Generator 46 verbunden werden kann. In dem Rahmen 40 können Hohlräume vorgesehen sein, die ein gewünschtes Auftriebs/Abtriebsverhalten des Gehäuses schaffen, so dass die Gesamteinheit in einer wählbaren Wassertiefe schweben kann und beispielsweise durch Befüllen des Hohlraums an die Wasseroberfläche auftauchen kann.

Die gesamte Anlage wird gegen ihren Auftrieb sowie gegen Reaktionskräfte der Strömung mit Hilfe von Ankern im Seeboden gesichert. Auftriebskörper 50 werden so eingestellt, dass das System wie ein Kollektor in der Form eines Segels unter der Wasseroberfläche schweben kann. Die Kupplungsbereiche der Schaufelräder sind über Getriebe 43 mit einem oder mehreren Generatoren 46 verbunden. Der von den Generatoren erzeugte Strom kann über die Ankerseile 52 bzw. neben den Ankerseilen geführte Stromleitungen zum Seeboden übertragen werden, wo beispielsweise Trafostationen 48 vorgesehen sein können.

Fig. 4 zeigt einen solchen netzartigen Verbund von mehreren Turbinenmodulen E gemäß Fig. 2 mit einer Verankerung. Der Verbund treibt im Gewässer wie ein am Boden verankertes Fischernetz, wobei die Sströmung eine horizontale Konvektionskraft und ein oberhalb der Turbinenmodule angeordneter Körper 50 eine Auftriebskraft erzeugen, die den Verbund in einer gewünschten Höhe über dem Gerwässerboden schweben lassen.

### Kommerzielle Anwendbarkeit

Erfindungsgemäße Schaufelradvorrichtungen können zur Energieerzeugung in kommerziellen Kraftwerken angewandt werden.

## Patentansprüche

1. Schaufelradvorrichtung mit einem drehbaren Schaufelrad (12), wobei:
a. das Schaufelrad (12) einen Rotor (14) und mehrere, gleichmäßig über den Umfang des Rotors (14) verteilte, schwenkbar an dem Rotor (14) befestigte Schaufeln (18) umfasst,
b. die Schaufeln (18) in einer Aufklapp-Schwenkbewegung in einer Aufklapprichtung von einer ersten Position in eine zweiten Position schwenkbar sind,
c. die Schaufeln (18) in der ersten Position am Rotor (14) anliegen,
d. die Schaufeln (18) in der zweiten Position in einer im Wesentlichen radialen Richtung von dem Rotor (14) abstehen,
e. das Schaufelrad (12) zur Anordnung in einer Strömung (19) ausgelegt ist, so dass die Strömung (19) wenigstens in einem Schlussteil der Aufklapp-Schwenkbewegung ein in die Aufklapprichtung gerichtetes Aufklappmoment auf die Schaufeln (18) ausübt,
wobei die Schaufelradvorrichtung eine mechanische Verbindung (30) benachbarter Schaufeln (18) untereinander umfasst, wobei die mechanische Verbindung (30) so ausgestaltet ist, dass das Aufklappmoment im Schlussteil der Aufklapp- Schwenkbewegung einer ersten Schaufel (18) zumindest teilweise in ein Aufklappmoment einer benachbarten Schaufel (18) in einem Anfangsteil der Aufklapp-Schwenkbewegung der benachbarten Schaufel (18) übersetzt wird, wobei die Schaufeln (18) in einem Drehpunkt (17) schwenkbar an dem Rotor (14) befestigt sind, **dadurch gekennzeichnet, dass** der Drehpunkt (17) die Schaufeln (18) jeweils in einen nach radial außen ausklappenden Arbeitsbereich (20) und einen nach radial innen klappenden Innenbereich (22) aufteilt, wobei der Innenbereich (22) in der zweiten Position an einem Anschlag (24) des Rotors (14) anliegt.

2. Schaufelradvorrichtung nach dem vorhergehenden Anspruch, **dadurch gekennzeichnet, dass**
die mechanische Verbindung (30) als ein längliches Koppelelement ausgebildet ist.

3. Schaufelradvorrichtung nach Anspruch 2,
**dadurch gekennzeichnet, dass** das Koppelelement (30) an einander entsprechenden Befestigungspunkten an den benachbarten Schaufeln (18) befestigt ist.

4. Schaufelradvorrichtung nach Anspruch 2,
**dadurch gekennzeichnet, dass**
das Koppelelement (30) an Befestigungspunkten an einer vorlaufenden Schaufel (18) und an einer nachlaufenden Schaufel (18) befestigt ist, wobei die Befestigungspunkte versetzt zueinander angeordnet sind.

5. Schaufelradvorrichtung nach Anspruch 4,
**dadurch gekennzeichnet, dass**
der Befestigungspunkt an der vorlaufenden Schaufel (18) gegenüber dem Befestigungspunkt an der nachlaufenden Schaufel (18) nach radial außen versetzt ist.

6. Schaufelradvorrichtung einem der Ansprüche 2 bis 5,
**dadurch gekennzeichnet, dass**
das Koppelelement (30) längenveränderlich ist und eine federnde Charakteristik aufweist.

7. Schaufelradvorrichtung nach einem der Ansprüche 3 bis 6,
**dadurch gekennzeichnet, dass**
zumindest einer der Befestigungspunkte in einem äußeren Endbereich der Schaufel (18) angeordnet ist.

8. Schaufelradvorrichtung nach einem der vorhergehenden Ansprüche,
**dadurch gekennzeichnet, dass** die Schaufeln (18) jeweils eine konkave Schaufelfläche umfassen, die in der zweiten Position einer Anströmrichtung der Strömung (19) zugewandt ist.

9. Schaufelradmodul mit einem gemeinsamen Rahmen (40) und mehreren Schaufelradvorrichtungen nach einem der vorhergehenden Ansprüche zur Verwendung unter Wasser zur Gewinnung von Energie aus Gewässerströmungen, wobei die mehreren Schaufelradvorrichtungen in dem gemeinsamen Rahmen (40) angeordnet sind.

10. Schaufelradmodul nach Anspruch 9,
**dadurch gekennzeichnet, dass** der Rahmen (40) zumindest in einer parallel zu einer Rotationsachse der Schaufelräder (12) verlaufenden Symmetrieebene symmetrisch ausgestaltet ist.

11. Schaufelradmodul nach Anspruch 9 oder 10,
wobei die Rotoren (14) der Schaufelradvorrichtungen jeweils mit einem Generator (46) verbunden sind.

12. Strömungskraftwerk mit wenigstens einem Modul nach einem der Ansprüche 9 - 11.

## Claims

1. Impeller wheel apparatus comprising a rotatable impeller wheel (12), wherein:
a. the impeller wheel (12) comprises a rotor (14) and a plurality of blades (18) uniformly distributed over the circumference of the rotor (14) and pivotably attached to the rotor (14),
b. the blades (18) are pivotable from a first position to a second position in an unfolding pivoting movement in an unfolding direction,
c. the blades (18) rest against the rotor (14) in the first position,
d. the blades (18) project from the rotor (14) in a substantially radial direction in the second position,
e. the impeller wheel (12) is designed to be arranged in a flow (19), so that the flow (19) exerts on the blades (18), at least in a final part of the unfolding pivoting movement, an unfolding moment directed in the unfolding direction,
said impeller wheel apparatus comprising a mechanical connection (30) connecting adjacent impellers (18) with each other, said mechanical connection (30) being configured such that the unfolding moment in the final part of the unfolding pivoting movement of a first impeller (18) is at least partially translated into an unfolding moment of an adjacent impeller (18) in an initial part of the unfolding pivotal movement of the adjacent impeller (18),
wherein the blades (18) are pivotally attached to the rotor (14) at a pivot (17),
**characterized in that** the pivot (17) divides the blades (18) into a working region (20) which folds out radially outwards and an inner region (22) which folds in radially inwards, the inner region (22) bearing against a stop (24) of the rotor (14) in the second position.

2. Impeller wheel apparatus according to the preceding claim,
**characterized in that**
the mechanical connection (30) is formed as an elongate coupling element.

3. Impeller wheel apparatus according to claim 2,
**characterized in that** the coupling element (30) is attached to corresponding attachment points on the adjacent blades (18).

4. Impeller wheel apparatus according to claim 2,
**characterised in that**
the coupling element (30) is fastened at attachment points on a leading blade (18) and on a trailing blade (18), the attachment points being arranged offset with respect to one another.

5. Impeller wheel apparatus according to claim 4,
**characterised in that**
the attachment point on the leading blade (18) is offset radially outwards with respect to the attachment point on the trailing blade (18).

6. Impeller wheel apparatus according to one of claims 2 to 5,
**characterised in that**
the coupling element (30) is variable in length and has a resilient characteristic.

7. Impeller wheel apparatus according to one of claims 3 to 6,
**characterised in that**
at least one of said attachment points is disposed in an outer end portion of said blade (18).

8. Impeller wheel apparatus according to one of the preceding claims,
**characterized in that** the blades (18) each comprise a concave blade surface which, in the second position, faces an inflow direction of the flow (19).

9. Impeller wheel module comprising a common frame (40) and a plurality of impeller wheel devices according to one of the preceding claims for use under water to recover energy from water currents, the plurality of impeller wheel devices being disposed in the common frame (40).

10. Impeller wheel module according to claim 9,
**characterized in that** the frame (40) is designed symmetrically at least in one plane of symmetry running parallel to an axis of rotation of the impeller wheels (12).

11. Impeller wheel module according to claim 9 or 10,
wherein the rotors (14) of the impeller wheel devices are each connected to a generator (46).

12. Fluid power plant with at least one module according to any of claims 9 - 11.

## Revendications

1. Appareil à roue à aubage comprenant une roue à aubage (12) rotative, dans lequel :
a. la roue à aubage (12) comprend un rotor (14) et une pluralité d'aubes (18) uniformément réparties sur la circonférence du rotor (14) et fixées pivotantes au rotor (14),
b. les aubes (18) sont pivotantes d'une première position à une deuxième position dans un mouvement pivotant de déploiement dans un sens de déploiement,
c. les aubes (18) reposent contre le rotor (14) dans la première position,
d. les aubes (18) se projettent depuis le rotor (14) dans un sens sensiblement radial dans la deuxième position,
e. la roue à aubage (12) est conçue pour être agencée dans un flux (19), de telle manière que le flux (19) exerce sur les aubes (18), au moins dans une partie finale du mouvement pivotant de déploiement, un moment de déploiement dirigé dans le sens de déploiement,
ledit appareil à roue à aubage comprenant une connexion mécanique (30) connectant des palettes (18) adjacentes les unes aux autres, ladite connexion mécanique (30) étant configurée de telle manière que le moment de déploiement dans la partie finale du mouvement pivotant de déploiement d'une première palette (18) est au moins partiellement traduit en un moment de déploiement d'une palette (18) adjacente dans une partie initiale du mouvement pivotant de déploiement de la palette (18) adjacente, dans lequel les aubes (18) sont fixées pivotantes au rotor (14) au niveau d'un pivot (17),
**caractérisé en ce que** le pivot (17) divise les aubes (18) en une région de travail (20) qui se déploie radialement vers l'extérieur et une région intérieure (22) qui se replie radialement vers l'intérieur, la région intérieure (22) portant contre une butée (24) du rotor (14) dans la deuxième position.

2. Appareil à roue à aubage selon la revendication précédente,
**caractérisé en ce que**
la connexion mécanique (30) est formée comme un élément d'accouplement allongé.

3. Appareil à roue à aubage selon la revendication 2,
**caractérisé en ce que** l'élément d'accouplement (30) est fixé à des points de fixation correspondants sur les aubes (18) adjacentes.

4. Appareil à roue à aubage selon la revendication 2,
**caractérisé en ce que**
l'élément d'accouplement (30) est fixé à des points de fixation sur une aube (18) d'attaque et sur une aube (18) de fuite, les points de fixation étant agencés décalés les uns par rapport aux autres.

5. Appareil à roue à aubage selon la revendication 4,
**caractérisé en ce que**
le point de fixation sur l'aube (18) d'attaque est décalé radialement vers l'extérieur par rapport au point de fixation sur l'aube (18) de fuite.

6. Appareil à roue à aubage selon l'une des revendications 2 à 5,
**caractérisé en ce que**
l'élément d'accouplement (30) est variable en longueur et a une caractéristique résiliente.

7. Appareil à roue à aubage selon l'une des revendications 3 à 6,
**caractérisé en ce que**
au moins un desdits points de fixation est disposé dans une partie d'extrémité extérieure de ladite aube (18).

8. Appareil à roue à aubage selon l'une des revendications précédentes,
**caractérisé en ce que** les aubes (18) comprennent chacune une surface d'aube concave qui, dans la deuxième position, fait face à un sens d'entrée de flux du flux (19).

9. Module à roue à aubage comprenant un châssis commun (40) et une pluralité de dispositifs à roue à aubage selon l'une des revendications précédentes pour une utilisation sous l'eau pour récupérer de l'énergie de courants d'eau, la pluralité de dispositifs à roue à aubage étant disposés dans le châssis commun (40).

10. Module à roue à aubage selon la revendication 9,
**caractérisé en ce que** le châssis (40) est conçu symétriquement au moins dans un plan de symétrie courant parallèle à un axe de rotation des roues à aubage (12).

11. Module à roue à aubage selon la revendication 9 ou 10,
dans lequel les rotors (14) des dispositifs à roue à aubage sont chacun connectés à un générateur (46).

12. Installation hydraulique avec au moins un module selon l'une quelconque des revendications 9-11.
